# EUROPEAN PATENT APPLICATION

(11) **EP 1 321 309 A2**
(43) Date of publication of application: **25.06.2003**
(21) Application number: 02102767.7
(22) Date of filing: 16.12.2002
(51) Int. Cl.: B41N 3/00, B41C 1/10

(54) **Method for making a lithographic printing plate**

(30) Priority: 21.12.2001 EP 01870291
(71) Applicant: AGFA-GEVAERT, 2640 Mortsel (BE)
(72) Inventor: Van de Leest, Rene, 2400, Mol (BE)

(57) **Abstract**

A method for making a lithographic printing plate from an imaging material comprising a ceramic oxide or an oxidic ceramic is disclosed, wherein a lithographic image is created by increasing the contact angle for water of the ceramic oxide or oxidic ceramic,
characterized in that an oxygen vacancy is introduced in the ceramic oxide or oxidic ceramic by a step selected from the group consisting of
- exposing the imaging material to ultraviolet radiation having a wavelength between 200 and 400 nm; and
- heating the imaging material under low partial oxygen pressure or in a reducing atmosphere.

The plate obtained can be used as a printing master for lithographic printing. After the print job, the lithographic image can be erased by heating the ceramic oxide or oxidic ceramic in an oxidizing atmosphere and the erased imaging material thus obtained can then be reused in a next cycle of imaging and printing.

## Description

### FIELD OF THE INVENTION

The present invention relates to a method for making a lithographic printing plate from an imaging material comprising a ceramic oxide or oxidic ceramic.

### BACKGROUND OF THE INVENTION

Lithographic printing typically involves the use of a so-called printing master such as a printing plate which is mounted on a cylinder of a rotary printing press. The master carries a lithographic image on its surface and a print is obtained by applying ink to said image and then transferring the ink from the master onto a receiver material, which is typically paper. In conventional lithographic printing, ink as well as an aqueous fountain solution (also called dampening liquid) are supplied to the lithographic image which consists of oleophilic (or hydrophobic, i.e. ink-accepting, water-repelling) areas as well as hydrophilic (or oleophobic, i.e. water-accepting, ink-repelling) areas. In so-called driographic printing, the lithographic image consists of ink-accepting and ink-abhesive (ink-repelling) areas and during driographic printing, only ink is supplied to the master.

Printing masters are generally obtained by the so-called computer-to-film method wherein various pre-press steps such as typeface selection, scanning, color separation, screening, trapping, layout and imposition are accomplished digitally and each color selection is transferred to graphic arts film using an image-setter. After processing, the film can be used as a mask for the exposure of an imaging material called plate precursor and after plate processing, a printing plate is obtained which can be used as a master.

In addition to the well-known photosensitive materials, also heat-sensitive printing plate precursors have become very popular. Such thermal materials offer the advantage of daylight-stability and are especially used in the so-called computer-to-plate method wherein the plate precursor is directly exposed, i.e. without the use of a film mask. Thermal plates are exposed to heat or to infrared light and the generated heat triggers a (physico-)chemical process, such as ablation, polymerization, insolubilization by cross-linking of a polymer or by particle coagulation of a thermoplastic polymer latex, and solubilization by the destruction of intermolecular interactions or by increasing the penetrability of a development barrier layer.

So-called 'computer-to-press' methods involve the exposure of a plate precursor while being mounted on a plate cylinder of a printing press by means of an image-setter that is integrated in the press. Printing presses with an integrated plate-setter are sometimes called digital presses. A review of digital presses is given in the Proceedings of the Imaging Science & Technology's 1997 International Conference on Digital Printing Technologies (Non-Impact Printing 13). Computer-to-press methods have been described in e.g. EP-A 640 478, EP-A 770 495, EP-A 770 496, WO 94/1280, EP-A 580 394 and EP-A 774 364.

Two types of such on-press imaging methods are known. According to a first type, a printing plate precursor is mounted on a printing press, image-wise exposed, optionally developed, and then used as a printing master and finally removed from the press and disposed of, thus requiring a new plate material for each image. In a second type of on-press imaging systems, the same lithographic substrate is used in a plurality of press runs (hereinafter called print cycles). Several methods are known in the prior art which enable to erase the lithographic image from the substrate and reuse said substrate in a next print cycle of imaging and printing. One of the prior art methods relies on the image-wise hydrophilic-hydrophobic transition of a ceramic such as zirconia or a zirconia-alumina composite and the subsequent reverse transition in an image erasure step, as described in e.g. US 5,743,189, US 5,543,269 and US 5,836,249. US 5,893,328 discloses a reusable printing material comprising a composite of zirconia alloy and α-alumina which can be imaged using high-energy infrared irradiation to cause localized "melting" of the alloy in the exposed areas, thereby creating hydrophobic/oleophilic surfaces. The mechanism for the conversion from hydrophilic/ oleophobic to hydrophobic/oleophilic is not clear: in US 5,836,249 it is disclosed that local ablation and formation of substoichiometric zirconia is responsible for the conversion to hydrophobic surfaces while in US 5,893,328 the same experimental conditions are said to provoke local melting as the cause for the transition to an hydrophobic state.

The prior art discloses the following exposure methods for the image-wise hydrophilic-hydrophobic conversion of ceramic surfaces :
- infrared laser irradiation, e.g. with a Nd:YAG laser emitting light at a wavelength of 1064 nm, or
- high power irradiation: the average power is 1 W to 50 W and the peak power lies between 6 kW and 100 kW.

The high laser power output required in the prior art methods implies the use of expensive exposure devices which are unsuitable for implementation in commercial platesetter. In addition, the high power induces melting, sintering or decomposition of the ceramic which leads to irreversible surface morphology changes thus making this process not a truly reversible process.

### SUMMARY OF THE INVENTION

The object of the present invention is to provide a truly reversible method for making a lithographic printing plate from an imaging material which can be recycled and reused in a next step of imaging and printing. Another object of the present invention is to provide such a reversible method without the need for high power exposure devices.

This object is realized by the method defined in claim 1. Specific embodiments are defined in the dependent claims.

According to the present invention, oxygen vacancies are formed in a ceramic oxide or oxidic ceramic by a step selected from the group consisting of
- exposure to ultraviolet radiation having a wavelength between 200 and 400 nm; and
- heating under low partial oxygen pressure or in a reducing atmosphere.

During the exposure to ultraviolet irradiation, the ceramic can also be heated. In the embodiments wherein the ceramic is heated, the temperature can be kept sufficiently low to avoid sintering or melting of the ceramic oxide or oxidic ceramic. In the embodiment wherein ultraviolet radiation is used, suitable light can be readily obtained with a low-pressure mercury lamp. In case heating under low partial oxygen pressure is used, it is preferably performed at a temperature of about 200°C or higher. Said heating under low partial oxygen pressure can be performed using a low-power diode laser, e.g. emitting between 10 and 500 mW of infrared light.

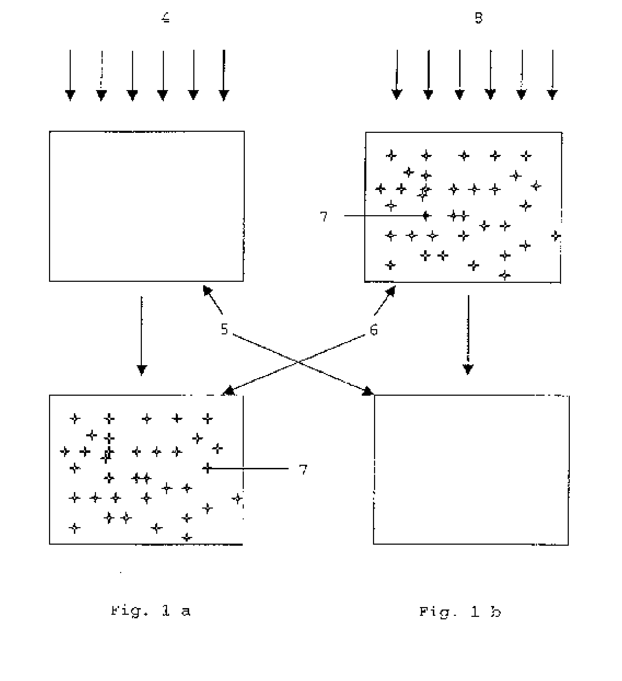

In the method of the invention, the increase of the contact angle for water is preferably higher than 20°, advantageously higher than 40°. As a possible, non-limiting explanation of the underlying mechanism, the increase of the contact angle is believed to be the result of the mentioned formation of oxygen vacancies at the surface of the ceramic. The general principles of a preferred embodiment according to the invention is shown in Figures 1 a and b. A hydrophilic ceramic surface 5 is generated by heating 8 the ceramic material or surface in an oxygen-containing atmosphere such as air at a temperature of T=200°C or higher. Generation of an oleophilic surface 6 is done by creating oxygen vacancies 7 by at least one of the mentioned steps 4 of exposure to ultraviolet radiation or heating under low partial oxygen pressure or in a reducing atmosphere.

The lithographic image can be erased by reducing the contact angle for water of the ceramic oxide or oxidic ceramic by the step of heating the ceramic in an oxidizing atmosphere. Said oxidizing atmosphere is preferably air. Said heating is preferably performed at about 200°C or higher.

The ceramic oxide or oxidic ceramic for use in the method according to the present invention is preferably selected from the group consisting of alumina, zirconia and anodized aluminum. The alumina is preferably α-alumina.

### BRIEF DESCRIPTION OF THE DRAWINGS

Figure 1 shows the creation and annihilation of an oxygen vacancy according to the present invention.

Figure 2 represents a preferred embodiment of the present invention.

Figure 3 represents embodiments of the lithographic printing process according to the present invention.

### DETAILED DESCRIPTION OF THE INVENTION

Ceramic oxides and oxidic ceramics are used in various applications, such as a substrate for supporting electrical circuits (e.g. in semiconductor production), membranes or filters in a wide range of dimensions, and for artifacts resistant to high wear and temperature. Some of the more interesting properties of ceramic materials include their hardness and their heat resistance and thermal conductivity, which makes ceramic oxides and oxidic ceramics especially useful in applications with high but specific material requirements.

Ceramic oxides and oxidic ceramics can be defined as solid compounds which are usually made by sintering particles (powder) at high temperatures to form a dense, hard and durable material. Ceramics can therefore be characterized by their specific mechanical and/or functional properties.

Preferred ceramic oxides or oxidic ceramics for use in the present invention are electrically insulating. Preferred ceramics have a submicron grain size, a suitable surface roughness and so-called 'native impurities' such as Na or Ca are preferably kept as low as possible while controlled introduction of impurities (doping) can be used to improve the properties of the surface. Preferably, dense ceramic material with densities ranging from 96% to 99% are used.

Monolithic oxide ceramics such as alumina and zirconia are preferably used to practice the present invention. Anodized aluminum and α-alumina are highly preferred. Also oxidic ceramic composites, grain boundary modified oxidic ceramics and ceramic layers on a substrate can be used. Said substrate can be selected from ceramics, glasses, metals and semiconductors or the like. Deposition methods include sol-gel, PVD, CVD, plasma-based deposition and/or laser-based deposition.

In a most preferred embodiment, the bandgap of the ceramic is larger than the enthalpy of formation of an oxygen vacancy, which suitably lies in the range from 2 to 5 eV. Oxygen vacancies are created by the following processes :

### UV-irradiation

Ultraviolet radiation having a wavelength (λ) between 200 and 400 nm, more preferably between 200 and 350 nm, is particularly suited to create oxygen vacancies according to the present invention. A low oxygen partial pressure is preferred in order to avoid ozone production. For example, a low-pressure mercury lamp (λ = 254 nm/15mW) can be used to create an oleophilic surface.

Irradiation with a xenon dimer excimer lamp (λ = 172 nm) did not produce an oleophilic surface. A possible explanation therefor may relate to the phenomenon that defect creation occurs below the surface and that the light energy is greater than the bandgap of the oxide so that charge carriers are created and recombination effects eliminate excess electrical charges.

### Heating under low partial oxygen pressure

Heating under a low partial oxygen pressure is believed to shift the defect equilibrium to the region where oxygen vacancies are the predominant defect species. A low partial oxygen pressure can be created by using a flow of inert gases such as nitrogen and argon. A better way even is to create a reducing atmosphere by adding a reducible gas such as hydrogen. The partial oxygen pressure is preferably less than 15%, more preferably less than 10% of the total pressure of the ambient atmosphere.

The heating is preferentially done with a low-power diode laser because heating at T=200°C is already sufficient to create oxygen vacancies under low partial oxygen pressure.

### EXAMPLES

The reversible hydrophilic / oleophilic conversion at the surface of ceramic materials forms the basis for the printing process. Ink is retained at oleophilic surfaces and is rejected at hydrophilic surfaces. Image formation occurs by turning the surface oleophilic and image erasure is effectuated by turning the surface hydrophilic.

Image formation (generation of an oleophilic surface) is done by creating oxygen vacancies.

Image erasure (generation of a hydrophilic surface) according to the present invention is done by annihilation of oxygen vacancies by reaction with oxygen.

### 1. Contact angle measurements

### 1.1 α-alumina (sample A)

α-alumina powder CT3000SG (Alcoa) was pressed, sintered and polished to form a ceramic artifact. The surface of said artifact was rendered hydrophilic by heating at T=250°C, during 1 hour, open to the air. The surface was then rendered oleophilic by each of the following steps :
- heating at T=250°C, during 1 hour, in a hydrogen atmosphere; the resulting contact angle for water was 74.2°.
- heating at T=250°C, during 1 hour, in a nitrogen atmosphere; the resulting contact angle for water was 61.4°.
- irradiation with UV light (λ = 254 nm) at T=200°C, during 1 hour; the resulting contact angle for water was 45.4°.

### 1.2 anodized aluminum (sample B)

A hydrophilic surface was prepared by irradiating anodized aluminum with UV light (λ = 254 nm). The surface was then rendered oleophilic by each of the following steps :
- heating at T=250°C, during 1 hour, in a hydrogen atmosphere; the resulting contact angle for water = 135.6°.
- heating at T=250°C, during 1 hour, in a nitrogen atmosphere the resulting contact angle for water = 65.6°.

### 2. Image-wise increase of the contact angle.

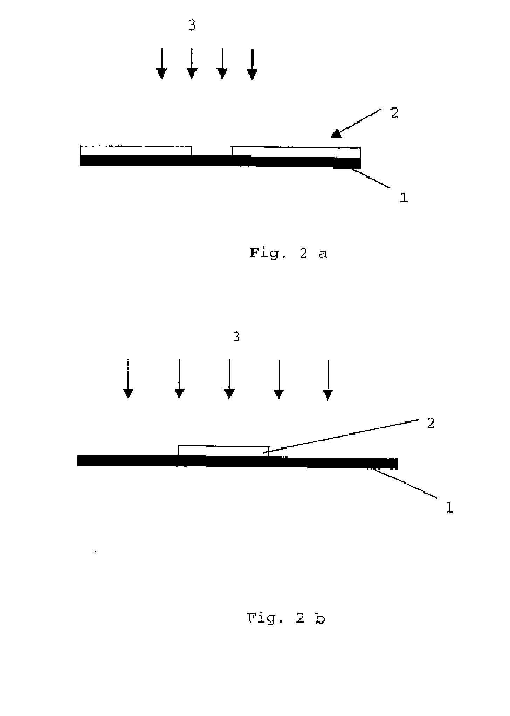

The surface of sample A was selectively exposed with UV irradiation 3 via a mask 2 (see figure 2 a and 2 b). The irradiated surface was hydrophobic and the non-irradiated surface remained hydrophilic.

Similar results were obtained with the anodized aluminum sample B.

### 3. Application of ink pattern on the image-wise irradiated materials A and B

The complete surface was sponged with water. The hydrophilic surfaces retained the water, creating a homogeneous water layer.

Printing ink was then applied to the sponge and again the complete surface was sponged. The hydrophobic surfaces retained the ink, while on the hydrophilic part of the surface, no ink was withheld.

The ink pattern was then transferred to a rubber stamp, which could be used to print the pattern e.g. on paper.

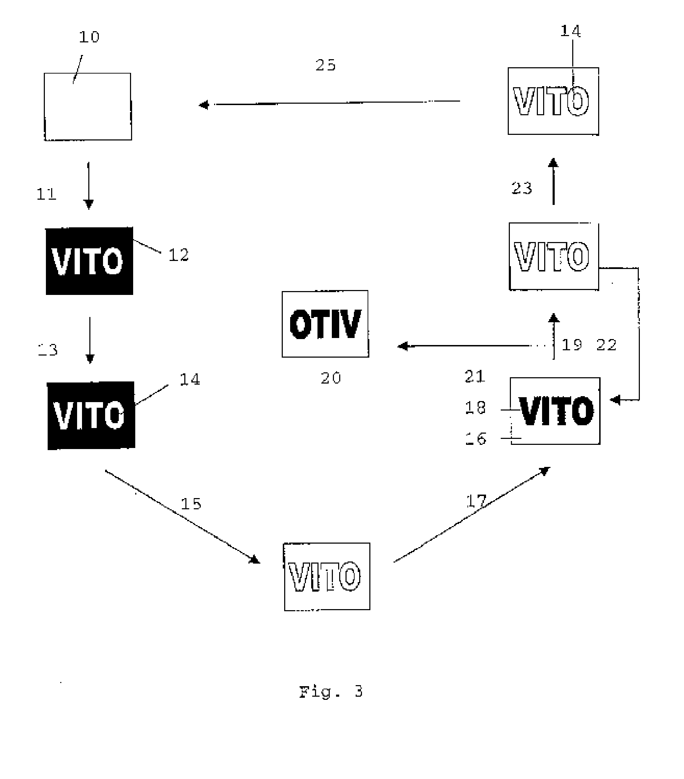

The reversible lithographic printing process according to a preferred embodiment of the present invention is summarized in figure 3.

A ceramic surface 10 substantially without surface defects is covered with a mask 12 (11). The surface is then treated (13) with the method for creating surface deficiencies according to the invention, such as irradiation with UV light (λ= 254 nm) at T=200°C, yielding an oleophilic surface where no mask covered the surface (14). Removal of the mask yields a ready-to-use lithographic printing plate. When sponging (17) with an ink solution, the oleophilic surface 14 will retain the ink, whereas the hydrophilic surface 16 will not. This creates an ink-loaded surface 18. Transfer of the ink to a rubber stamp (or directly to a support surface) (19,21) yields an ink-loaded rubber stamp 20 which can be used to print on the usual support (e.g. paper). The printing plate can be reloaded with ink (22) and reused to print the same pattern. If no more identical prints are needed, the printing plate is cleaned (23) and can be regenerated (25) to a completely hydrophilic surface by the method of the invention (e.g. by heating at T=250°C, during 1 hour, open to the air). The printing plate can now be reused.

## Claims

1. A method for making a lithographic printing plate from an imaging material comprising a ceramic oxide or an oxidic ceramic, wherein a lithographic image is created by image-wise increasing the contact angle for water of the ceramic oxide or oxidic ceramic, **characterized in that** an oxygen vacancy is introduced in the ceramic oxide or oxidic ceramic by a step selected from the group consisting of
- exposing the imaging material to ultraviolet radiation having a wavelength between 200 and 400 nm;
- heating the imaging material under low partial oxygen pressure or in a reducing atmosphere.

2. A method according to claim 1 wherein the oxygen vacancy is introduced in the ceramic oxide or oxidic ceramic by exposing the imaging material to ultraviolet radiation having a wavelength between 200 and 400 nm while heating said imaging material.

3. A method according to claim 1 or 2 wherein each of said heating steps does not provoke sintering or melting of the ceramic oxide or oxidic ceramic.

4. A method according to any of the preceding claims wherein the contact angle is increased by at least 20°.

5. A method according to any of the preceding claims wherein the contact angle is increased by at least 40°.

6. A method according to any of the preceding claims wherein the enthalpy of formation of the oxygen vacancy is the range from 2 to 5 eV.

7. A method of lithographic printing comprising the steps of
(a)making a lithographic printing plate by the method of any of claims 1 to 6;
(b)erasing the lithographic image by decreasing the contact angle for water of the ceramic oxide or oxidic ceramic, wherein the oxygen vacancy is annihilated by the step of heating the ceramic oxide or oxidic ceramic in an oxidizing atmosphere.

8. A method of lithographic printing comprising the steps of
(a)making a lithographic printing plate by the method of any of claims 1 to 6;
(b)erasing the lithographic image by decreasing the contact angle for water of the ceramic oxide or oxidic ceramic, wherein the oxygen vacancy is annihilated by the step of heating the ceramic oxide or oxidic ceramic in an oxidizing atmosphere;
(c)reusing the erased imaging material in a next step of making a lithographic printing plate by the method of any of claims 1 to 6.

9. A method according to any of the preceding claims wherein the ceramic oxide or oxidic ceramic comprises alumina and/or zirconia.

10. A method according to any of the preceding claims wherein the ceramic oxide or oxidic ceramic comprises α-alumina or anodized aluminum.
